# EUROPEAN PATENT SPECIFICATION

(11) **EP 1 704 944 B1**
(45) Date of publication and mention of the grant of the patent: **29.04.2009**
(21) Application number: 06380054.4
(22) Date of filing: 22.03.2006
(51) Int. Cl.: B21K 21/08

(54) **Airbag tube with cold-formed charging head and procedure for obtaining the same**
Rohr für Airbag mit Kaltverfomtem Gasgenerator und Verfahren zu dessen Herstellung
Tuyau pour airbag avec générateur de gaz formé a froid et procédé pour sa production

(30) Priority: 22.03.2005 ES 200500660
(43) Date of publication of application: 27.09.2006
(73) Proprietor: Cie Automotive, S.A., 48011 Bilbao (ES)
(72) Inventor: Zabala Zabaleta, Andoni, 48011 Bilbao (ES); Paguey Lezamiz, Eduardo, 48011 Bilbao (ES)
(74) Representative: Carpintero Lopez, Francisco

(56) References cited:
- EP-A- 1 319 558
- FR-A- 1 155 575
- FR-A- 1 347 841
- GB-A- 769 345
- US-A1- 2003 178 827
- US-B1- 6 167 983

## Description

### OBJECT OF THE INVENTION

The present invention relates to a procedure for cold forming and closing of an airbag tube and more specifically of the extremity of the tube to which the nozzle is coupled used for charging the gas in its interior.

An example of a procedure for cold forming and closing a tube is known from FR-A-1347841 in which the thickness at the end of the tube is reduced and the reduced thickness end is bent toward the axis of the tube.

### BACKGROUND OF THE INVENTION

As is known, the tube of the airbag is intended to contain the gas which will produce instantaneous inflation of the airbag and is generally implemented in high strength steel since it has to withstand high pressures in its interior. The tube has a charging extremity or head provided with an orifice on which is coupled a nozzle or injector that introduces the gas into the tube, this extremity of the tube requiring a perfectly plane front face to allow a correct coupling of the injector.

At the present time the forming of airbag tubes is carried out by hot deformation and the heating energy is provided by induction, whereby the procedure requires the employment of special machinery which is costly and consumes much power in the process of forming the airbag tube.

### DESCRIPTION OF THE INVENTION

The procedure, as per claim 1, for obtaining the airbag tube object of this invention is proposed to resolve the outlined problem by means of a simple and optimised method of cold-forming, which permits a reduction in the cost of obtaining the airbag tube, through requiring a less costly installation than that for induction and, at the same time, the power consumed during the tube deformation process is substantially less.

The procedure, as has been indicated, is of application for forming the head of the airbag tube to which the charging nozzle of the injector is coupled, which introduces the gas inside the tube.

For this purpose, it is based on a cylindrical tube of high strength steel, on one extremity of which a number of operations will be carried out for the purpose of obtaining, from the original cylindrical tubular section, a sector of less diameter and flattened at the tip, in which an orifice is defined to connect the charging nozzle.

Also, the different operations carried out have the object of achieving that the mouth of the orifice obtained for the connection of the charging nozzle has a thickness similar to that of the original tube.

The sequence proceeds in accordance with the stages that are described below.

In a first stage a bevelling is carried out, by turning or similar method, of one extremity of the tube which will constitute the charging head after the cold-forming process, the object of this bevelling being the progressive removal of material at this extremity of the tube to achieve a reduction in the thickness of the free edge or tip of the extremity of the tube. This operation is performed because during the different stages of the procedure a progressive increase of material will take place in this extremity of the tube, whereby this initial reduction will allow that at the end of the forming process, the extremity of the tube has practically the same thickness as the rest of the tube, that is, the original thickness.

Next, the diameter of the tube is reduced in a final length of the bevelled extremity, giving rise to a final length of smaller diameter than the rest of the tube, the aforesaid final length having a variable thickness which is progressively diminishing toward the tip.

Subsequently, a first angular deformation takes place of the aforesaid final length of the bevelled extremity with progressive reduction of the diameter of the aforesaid length toward its tip.

In a subsequent phase, a second deformation of the aforesaid final length is carried out to achieve a greater reduction in the diameter of the tip.

In the following stage bending is carried out of the tip of the final length of the tube, which causes the closing of the tip toward the interior of the tube, so beginning the forming of the coupling orifice of the charging nozzle.

In a last stage, the flattening of the tip takes place to obtain a plane front and a central orifice, to which the charging nozzle will be coupled. The area of the mouth of the central orifice formed has a thickness similar to that of the original tube.

In accordance with the procedure described, cold-deforming signifies a substantial saving in energy and a smaller investment in machinery when compared with the hot-forming process for obtaining the tube.

### DESCRIPTION OF THE DRAWINGS

To complete the description being made and in order to assist in a better understanding of the characteristics of the invention, in accordance with a preferred example of practical embodiment, this description is accompanied, as an integral part of the same, with a set of drawings by way of illustration but not restrictive, in which the following has been represented:

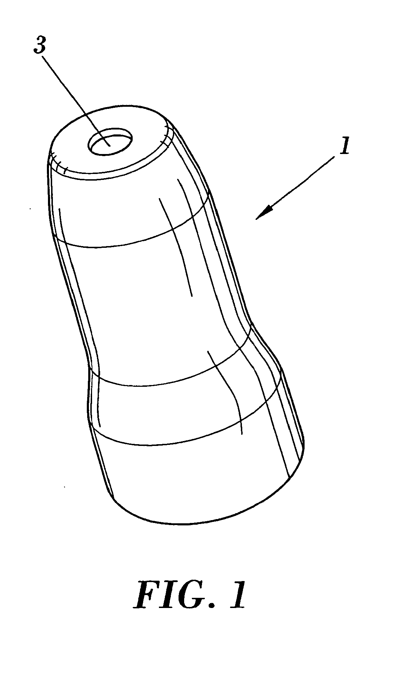

Figure 1. - It shows a view in perspective of the head of the airbag tube obtained in accordance with the procedure object of this invention.

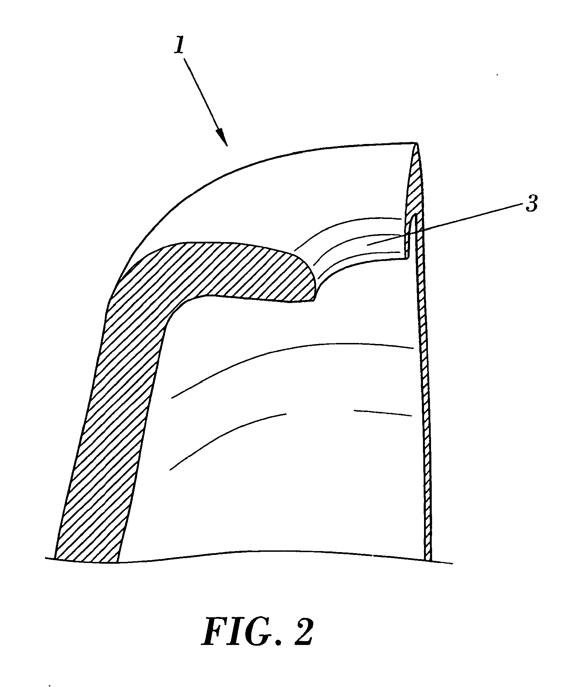

Figure 2. - It shows a view in partial perspective and cross-section of the extremity of the tube obtained according to the procedure object of this invention, in which the plane front of the tube is observed in detail and the orifice defined therein, as well as the thickness thereof.

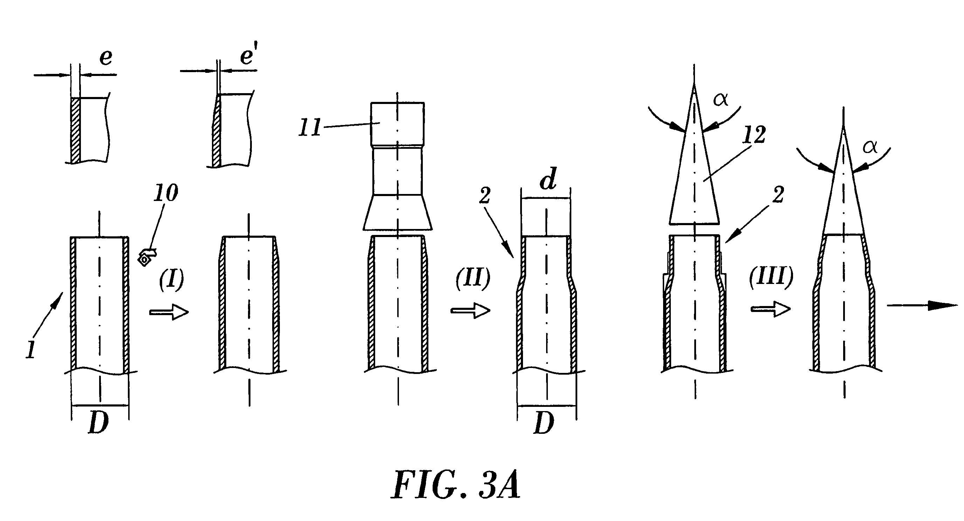

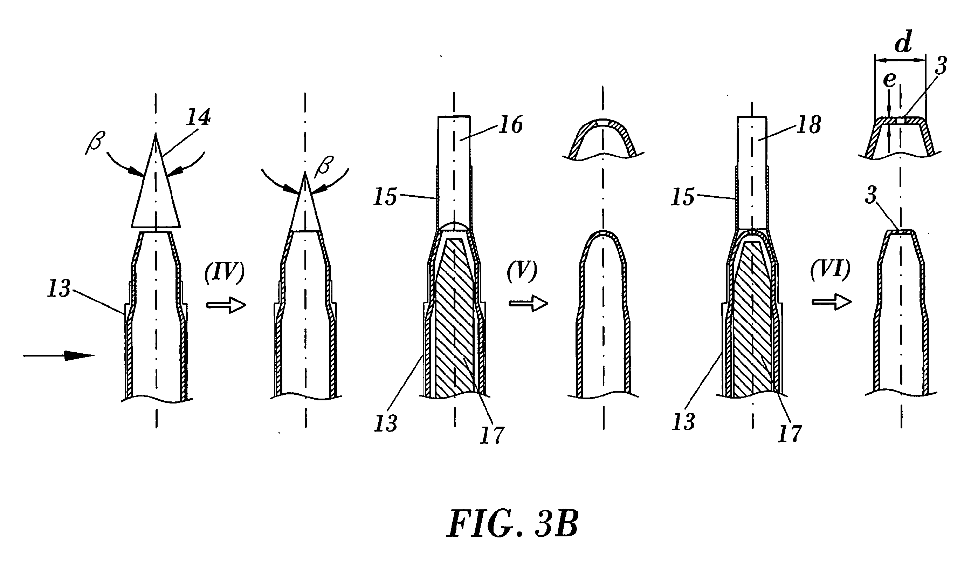

Figure 3. - It shows a sequence in which the tube is observed, after the different stages of cold-forming, as well as the tools employed.

### PREFERRED EMBODIMENT OF THE INVENTION

In the light of the figures a method is described hereunder of a preferred embodiment of the procedure for obtaining an airbag tube for motor vehicles of the type of those which contain gas that is introduced through a nozzle which is coupled on one of the extremities of the tube.

Starting with a tube of 30 mm in diameter and having a thickness of 1.8 mm, the procedure of cold-forming the airbag tube object of the invention is carried out in accordance with the following stages:
a) Bevelling (I), by turning or similar, of one extremity of the cylindrical tube (1), which extremity will constitute the charging head at the end of the forming process, to achieve a progressive reduction in the thickness of the tube at said extremity, so that at the tip of the same a thickness of 1.2 mm is obtained,
b) reduction (II) of the external diameter **D** of the tube to obtain, in a final length (2) of the bevelled extremity, a diameter **d** = 25 mm, constant over a length of 20 mm,
c) a first angular deformation (III), of at least a part of the final length (2), which defines an external conicity in the aforesaid final length (2), with an angle **α** = 20° with respect to the axis of the tube (1), to achieve a progressive reduction of the diameter toward the free extremity or tip of the final length,
d) a second angular deformation (IV), of at least a part of the final length (2), which defines an external conicity in the aforesaid final length (2), with an angle **β** = 30° with respect to the axis of the tube (1), to achieve a progressive reduction of the diameter toward the free extremity or tip of the final length (2),
e) bending of the tip of the final length (2), toward the interior of the tube, to achieve the closing of the tip which defines a central orifice (3) for the subsequent coupling of the charging nozzle,
f) flattening of the tip of the final length (2) for obtaining a plane front (4) which will allow a proper coupling of the charging nozzle. This plane front (4) will have a diameter of between 4 and 8 mm and the central orifice (3) a diameter of between 2 and 3 mm. In the area of the mouth of the central orifice (3), a thickness is achieved similar to the initial thickness e = 1.8 mm of the original tube (1).

In the operations described above, a number of tools participate which have been represented schematically and which are described below to facilitate the understanding of the different stages which define the procedure object of the invention.

In the first stage corresponding to the bevelling (I) of the cylindrical tube, a lathe (10) can intervene which reduces progressively the thickness of the material in the tip.

In the stage corresponding to the reduction (II) of the external diameter of the tube **D** = 30 mm, a drawing machine (11) is used for obtaining the final length (2) of the tube with smaller diameter **d** = 25 mm.

To carry out the first angular deformation (III) a first tool of truncated conical shape (12) is used having an angle α = 20° against which the final length (2) of the tube impinges, which is mounted in a fixed support (13).

The second angular deformation (IV) also takes place with the help of a second tool of truncated conical shape (14) having an angle **β** = 30° against which the final length (2) of the tube impinges, also mounted in a fixed support (13), which instead of having a truncated conical form of angle **α** = 20°, takes another truncated conical form of greater angle **β** = 30°.

The bending stage (V) requires the participation of the fixed support (13) in which the tube is mounted, an upper tool (15) which can fit on the form of the final length, a male cylindrical forming piece (16), curved on its base, which impinges guided on the upper tool (15) against the tip of the final length (2) to bend it, and an interior male piece (17) which reproduces the forms of the tube and fits snugly inside the tube when the impact of the male forming piece (16) takes place.

In the final stage of flattening the tip (VI), the fixed support (13) on which the tube is mounted is used, the upper tool (15) which fits on the form of the final length (2), the interior male piece (17) which reproduces the forms of the tube and a completely cylindrical press (18) that is displaced guided inside the upper tool (15) until impinging on the tip determining the planar final finish thereof and of the orifice (3) to which the nozzle will be connected.

## Claims

1. Procedure for obtaining an airbag tube by cold forming, starting with a tube (1) having an external diameter **D** and a thickness **e,** which comprises the following stages:
a) bevelling (I) of one end of the tube (1), which end will constitute the charging head, by progressive reduction of the thickness of the tube at said end, achieving on its free edge or tip a thickness **e'<e**
b) reduction (II) of the diameter **D** of the tube (1), in a final section (2) of the bevelled end of the tube (1), until reaching a constant diameter **d < D**
c) a first angular deformation (III), of at least a part of the final section (2), with an angle α in the axial direction, which defines a progressive reduction of the diameter of the aforesaid final section (2) toward its tip
d) a second angular deformation (IV), of at least a part of the final section (2), with an angle β > α in the axial direction, which defines a progressive reduction of the diameter of the aforesaid final section (2) toward its tip
e) bending (V) of the free end or tip of the final section (2) which causes an approximation of the aforesaid free end toward the axis of the tube (1), which begins the conformation of the coupling orifice of the charging nozzle
f) flattening (VI) of the free end or tip of the final section (2) of the tube (1), which defines a flat front and a central orifice (3) intended for the attachment of a charging nozzle, the mouth of said central orifice (3) having a thickness **e** similar to the thickness of the original tube (1)

2. Procedure for obtaining an airbag tube, according to claim 1, wherein, starting with a tube (1), having a diameter **D** of the order of 30 mm and a thickness **e** of the order of 1.8 mm, the stages of the cold-forming procedure are carried out in accordance with the following parameters:
- A thickness **e'** in the free edge of the end of the tube (1), after the bevelling stage (I), of the order of 1.2 mm.
- A reduction (II) in a final section (2), of approximately 20 mm total length, until reaching a diameter d of the order of 25 mm.
- An angle α of the order of 20°.
- An angle β of the order of 30°.
- A flat front, produced by the flattening (VI), with a diameter **d'** of between 4 and 8 mm and an orifice (3) with a diameter of between 2 and 3 mm.

3. Airbag tube with cold-formed charging head **characterized in that** it has a cylindrical body of diameter 30 mm and thickness 1.8 mm and an end, also cylindrical, of diameter 25 mm, which is extended forming a final section (2) having an approximate total length of 20 mm, the tip of which has a flat end with a diameter of between 4 and 8 mm, with a central orifice of diameter between 2 and 3 mm, for the attachment of the charging nozzle.

## Patentansprüche

1. Verfahren zum Herstellen eines Airbag-Rohrs durch Kaltformung, ausgehend von einem Rohr (1) mit einem Außendurchmesser D und einer Dicke e, wobei das Verfahren die folgenden Schritte aufweist:
a) Abschrägen (I) eines Endes des Rohrs (1), wobei dieses Ende den Zuführkopf bildet, durch progressive Reduzierung der Dicke des Rohrs an dem Ende, wobei an dessen freiem Rand oder Endteil eine Dicke e' < e gebildet wird,
b) Reduzieren (II) des Durchmessers D des Rohrs (1) in einem Endabschnitt (2) des abgeschrägten Endes des Rohrs (1) bis zum Erreichen eines konstanten Durchmessers d < D,
c) erstes winkliges Verformen (III) mindestens eines Teils des Endabschnitts (2) mit einem Winkel α in der Axialrichtung, wobei das Verformen eine progressive Reduzierung des Durchmessers des genannten Endabschnitts (2) zu seinem Endteil hin bildet,
d) zweites winkliges Verformen (IV) mindestens eines Teils des Endabschnitts (2) mit einem Winkel β > α in der Axialrichtung, wobei das Verformen eine progressive Reduzierung des Durchmessers des genannten Endabschnitts (2) zu seinem Endteil hin bildet,
e) Biegen (V) des freien Endes oder Endteils des Endabschnitts (2), wobei das Biegen eine Annäherung des genannten freien Endes zu der Achse des Rohrs (1) bewirkt, womit die Anpassung der Ankopplungsöffnung der Zuführdüse beginnt,
f) Abflachen (VI) des freien Endes oder Endteils des Endabschnitts (2) des Rohrs (1), wobei das Abflachen eine flache Front und eine zur Befestigung einer Zuführdüse vorgesehene zentrale Öffnung (3) bildet, wobei die Mündung der zentralen Öffnung (3) eine Dicke e ähnlich der Dicke des ursprünglichen Rohrs (1) hat.

2. Verfahren zum Herstellen eines Airbag-Rohrs nach Anspruch 1, bei dem ausgehend von einem Rohr (1) mit einem Durchmesser D in der Größenordnung von 30 mm und einer Dicke e in der Größenordnung von 1,8 mm die Schritte des Kaltformungsvorgangs gemäß den folgenden Parametern durchgeführt werden:
- einer Dicke e' in der Größenordnung von 1,2 mm an dem freien Rand des Endes des Rohrs (1) nach dem Abschrägungs-Schritt (I),
- einer Reduzierung (II) eines eine Gesamtlänge von im Wesentlichen 20 mm aufweisenden Endabschnitts (2) bis zum Erreichen eines Durchmessers d in der Größenordnung von 25 mm,
- einem Winkel α in der Größenordnung von 20°,
- einem Winkel β in der Größenordnung von 30°,
- einer durch das Abflachen (VI) erzeugten flachen Front mit einem Durchmesser d' zwischen 4 und 8 mm und einer Öffnung (3) mit einem Durchmesser d' zwischen 2 und 3 mm.

3. Airbag-Rohr mit einem kaltgeformten Zuführkopf, **dadurch gekennzeichnet, dass** das Rohr einen zylindrischen Körper mit einem Durchmesser von 30 mm und einer Dicke von 1,8 mm und ein ebenfalls zylindrisches Ende mit einem Durchmesser von 25 mm aufweist, das unter Bildung eines Endabschnitts (2) einer Gesamtlänge von im Wesentlichen 20 mm verlängert ist, dessen Endteil ein flaches Ende mit einem Durchmesser zwischen 4 und 8 mm und mit einer zur Befestigung der Zuführdüse vorgesehenen zentralen Öffnung mit einem Durchmesser zwischen 2 mm und 3 mm aufweist.

## Revendications

1. Procédé pour obtenir un tube pour coussin gonflable par façonnage à froid, en partant d'un tube (1) de diamètre extérieur D et d'épaisseur e, selon les étapes suivantes :
a) chanfreinage (I) d'une extrémité du tube (1) qui constituera la tête de charge, par une réduction progressive de l'épaisseur de cette extrémité pour obtenir sur son bord ou son bout libre une épaisseur e' < e,
b) réduction (II) du diamètre D du tube (1), dans une section finale (2) de l'extrémité chanfreinée du tube (1), jusqu'à obtention d'un diamètre constant d < D,
c) première déformation angulaire (III), d'au moins une partie de la section finale (2), avec un angle α dans la direction axiale, laquelle définit une réduction progressive du diamètre de la section finale (2) vers son bout,
d) seconde déformation angulaire (IV), d'au moins une partie de la section finale (2), avec un angle β > α dans la direction axiale, laquelle définit une réduction progressive du diamètre de la section finale (2) vers son bout,
e) pliage (V) de l'extrémité ou bout libre de la section finale (2), pour entraîner une approximation de l'extrémité libre vers l'axe du tube (1) qui débute la conformation de l'orifice de couplage de l'injecteur de charge,
f) aplatissement (VI) de l'extrémité ou bout libre de la section finale (2) du tube (1), pour définir une face avant plate et un orifice central (3) destiné à la fixation d'un injecteur de charge, l'embouchure de cet orifice central (3) ayant une épaisseur e similaire à l'épaisseur du tube (1) original.

2. Procédé pour obtenir un tube pour coussin gonflable, selon la revendication 1,
**caractérisé en ce qu'**
en commençant avec un tube (1), de diamètre D de l'ordre de 30 mm et une épaisseur e de l'ordre de 1,8 mm, les étapes du procédé de façonnage à froid sont réalisées selon les paramètres suivants :
- une épaisseur e' du bord libre de l'extrémité du tube (1), après l'étape de chanfreinage (I), de l'ordre de 1,2 mm,
- une réduction (II) d'une section finale (2), de 20 mm environ de longueur totale, jusqu'à obtention d'un diamètre d de l'ordre de 25 mm,
- un angle α de l'ordre de 20°,
- un angle β de l'ordre de 30°,
- une face avant plate, produite par aplatissement (VI), ayant un diamètre compris entre 4 et 8 mm et un orifice (3) ayant un diamètre compris entre 2 et 3 mm.

3. Tube pour coussin gonflable comprenant une tête de charge façonnée à froid,
**caractérisé par**
- un corps cylindrique d'un diamètre de 30 mm et d'une épaisseur de 1,8 mm,
- une extrémité allongée également cylindrique, d'un diamètre de 25 mm, formant une section finale (2) d'une longueur totale approximative de 20 mm, dont le bout présente une extrémité plate d'un diamètre compris entre 4 et 8 mm, et l'orifice central pour la fixation de l'injecteur de charge présente un diamètre compris entre 2 et 3 mm.
